(19) Europäisches Patentamt
European Patent Office
Office européen des brevets

(11) **EP 3 976 383 B1**

(12) **EUROPEAN PATENT SPECIFICATION**

(45) Date of publication and mention of the grant of the patent:
**23.10.2024 Bulletin 2024/43**

(21) Application number: **20719766.6**

(22) Date of filing: **24.03.2020**

(51) International Patent Classification (IPC):
**B41J 2/165** $^{(2006.01)}$ **C11D 3/43** $^{(2006.01)}$

(52) Cooperative Patent Classification (CPC):
**B41J 2/16552; C11D 3/43;** B41J 2002/16558;
C11D 3/164; C11D 3/2041; C11D 3/2065;
C11D 3/2068

(86) International application number:
**PCT/JP2020/013083**

(87) International publication number:
**WO 2020/241017 (03.12.2020 Gazette 2020/49)**

(54) **CLEANING LIQUID, SET, INK-JET RECORDING APPARATUS AND CLEANING METHOD**

REINIGUNGSFLÜSSIGKEIT, SATZ, TINTENSTRAHLAUFZEICHNUNGSGERÄT UND REINIGUNGSVERFAHREN

LIQUIDE DE NETTOYAGE, ENSEMBLE, APPAREIL D'ENREGISTREMENT À JET D'ENCRE ET PROCÉDÉ DE NETTOYAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.05.2019 JP 2019102155**

(43) Date of publication of application:
**06.04.2022 Bulletin 2022/14**

(73) Proprietor: **Brother Kogyo Kabushiki Kaisha Aichi 467-8561 (JP)**

(72) Inventors:
• **NAGANO Taro**
  **Nagoya-shi, Aichi 467-8562 (JP)**
• **KURIKI Hirofumi**
  **Nagoya-shi, Aichi 467-8562 (JP)**
• **HIGASHIYAMA Shunichi**
  **Nagoya-shi, Aichi 467-8562 (JP)**

(74) Representative: **Kuhnen & Wacker Patent- und Rechtsanwaltsbüro PartG mbB Prinz-Ludwig-Straße 40A 85354 Freising (DE)**

(56) References cited:
**WO-A1-2018/124120    WO-A1-2018/124124
US-A1- 2005 018 023    US-B2- 10 293 600**

**Description**

[Technical Field]

The present invention relates to a cleaning liquid (cleaning fluid, cleaning solution), a set, an ink-jet recording apparatus and a cleaning method.

[Background Art]

A variety of kinds of cleaning liquid are proposed as a cleaning liquid for a discharge nozzle (jetting nozzle) and an ink channel of an ink-jet recording apparatus. For example, Patent Literature 1 describes that a liquid obtained by removing a dye from a dye ink is made to be a cleaning liquid. Further, Patent Literature 2 describes a maintenance liquid containing polyvalent alcohols, monovalent alcohols and water; Patent Literature 3 describes a maintenance liquid containing a lower alcohol, an anionic surfactant and water; and Patent Literature 4 describes a maintenance liquid containing a water-soluble chelating agent and water.

WO 2018/124124 A1 discloses a cleaning liquid for an aqueous ink including a pigment and a water-insoluble polymer. The cleaning liquid includes: a surfactant (A); a water-soluble organic solvent (B) including a diethylene glycol monoisopropyl ether (b-l); and water. The surfactant (A) includes at least one substance selected from (a-l) acetylene glycol and ethylene oxide adducts thereof, and (a-2) polyethylene glycol alkyl ethers having alkyl groups with eight or more carbon atoms, and polyethylene glycol aryl ethers having aryl groups with six or more carbon atoms. The water-soluble organic solvent (B) content is 5-30 mass%. US 2005/0018023 A1 discloses a maintenance liquid for an ink jet recording apparatus which possesses excellent cleaning properties. In particular, a maintenance liquid, which exhibits excellent cleaning properties even in an ink jet printer using an ink having a high colorant density and containing a pigment, and a maintenance liquid for an ink jet recording apparatus, which does not attack members for a printer and possesses excellent antifoaming properties and preservative/antimold effect, are disclosed. The maintenance liquid for an ink jet recording apparatus according to the present invention comprises water and an alkylene glycol monoalkyl ether.

US 2017/0008312 A1 discloses an ink jet recording device capable of maintaining an ejection stability for a long period of time. The inkjet recording device includes a recording head having an ejection port configured to eject an aqueous ink and an ejection port surface in which the ejection port is opened and a liquid supply mechanism configured to supply an ejection-port clogging prevention liquid into the ejection port, the aqueous ink contains at least one component selected from the group consisting of pigment particles and resin particles, and the clogging prevention liquid has a dielectric constant of 20 to 40 at 25° C.

WO 2018/124120 A1 discloses a cleaning liquid for a water-based ink that contains a pigment and a water-insoluble polymer, said cleaning liquid containing (A) an acetylene glycol having an average molar number of addition of EO of 0 to 2 mol, (B) at least one compound selected from the group consisting of an acetylene glycol having an average molar number of addition of EO of not less than 4 mol and a polyethylene glycol alkyl ether containing an alkyl group having not less than 8 carbon atoms, (C) a water-soluble organic solvent and water, in which the water-soluble organic solvent (C) contains at least one water-soluble organic solvent having a boiling point of not lower than 90°C; a boiling point of the water-soluble organic solvent (C) is not higher than 250°C in terms of a weighted mean value thereof; and a content of the water-soluble organic solvent (C) in the cleaning liquid is not more than 20% by mass.

[Citation List]

[Patent Literature]

[PATENT LITERATURE 1] Japanese Patent Application Laid-open No. SHO 58-71170
[PATENT LITERATURE 2] Japanese Patent Application Laid-open No. SHO 62-169876
[PATENT LITERATURE 3] Japanese Patent Application Laid-open No. SHO 62-169877
[PATENT LITERATURE 4] Japanese Patent Application Laid-open No. HEI 01-148557

[Summary]

[Technical Problem]

On the other hand, there is a demand for a water-based ink for ink-jet recording which has a satisfactory wetting property with respect to a recording medium having a low water-absorbing property or having a non-water absorbing property (hereinafter referred to as "hydrophobic" recording medium, in some cases), such as coated paper, film, etc. In order to provide such a water-based ink, it is conceivable to add a wetting agent in the water-based ink. However, in a case that maintenance (cleaning of a discharge nozzle, a wiper wiping the discharge nozzle, an ink channel, etc.) is performed in an ink-jet recording apparatus using the water-based ink added with the wetting agent, the wetting agent in the water-based ink undergoes a phase separation, which in turn causes any blocking (stoppage, closing) of the channel and/or clogging of the nozzle, in some cases.

In view of the above situation, an object of the present invention is to provide a cleaning liquid capable of suppressing any closing of channel and clogging of nozzle during the maintenance of an ink-jet recording apparatus using a water-based ink having a satisfactory wetting property with respect to a hydrophobic recording medium.

[Solution to the Problem]

According to a first aspect of the present invention, there is provided a cleaning liquid usable for cleaning of an ink-jet recording apparatus, the cleaning liquid including:

a nonionic surfactant, solubility of the nonionic surfactant in water at 20°C being less than 0.2% by mass;
a first water-soluble organic solvent of which solubility parameter is not less than 13;
a second water-soluble organic solvent of which solubility parameter is less than 12; and
water,
wherein the cleaning liquid satisfies the following conditions (1) to (4):

$$\text{Condition (1): } X \geq 0.1$$

$$\text{Condition (2): } A - B \geq 0$$

$$\text{Condition (3): } B / X \geq 15$$

$$\text{Condition (4): } 10 \leq A + B \leq 60$$

in the conditions (1) to (4),
X: a content amount (% by mass) of the nonionic surfactant in an entire amount of the cleaning liquid,
A: a content amount (% by mass) of the first water-soluble organic solvent in the entire amount of the cleaning liquid, and
B: a content amount (% by mass) of the second water-soluble organic solvent in the entire amount of the cleaning liquid. wherein the first water-soluble organic solvent includes at least one selected from the group consisting of: glycerol, diethylene glycol and propylene glycol and wherein the second water-soluble organic solvent includes at least one selected from the group consisting of: tripropylene glycol, 1,2-hexanediol, triethylene glycol-n-butyl ether and tripropylene glycol-n-butyl ether.

According to a second aspect of the present invention, there is provided a set including:

the cleaning liquid of the first aspect; and
a water-based ink for ink-jet recording including water-insoluble particles and water.

According to a third aspect of the present invention, there is provided an ink-jet recording apparatus as defined in claim 6 including:

an ink storing part configured to store an ink therein;
an ink-jet head configured to discharge the ink stored in the ink storing part;
an ink channel provided between the ink storing part and the ink-jet head; and
a cleaning liquid-supplying mechanism configured to supply, to the ink-jet head and the ink channel, the cleaning liquid of the first aspect.

According to a fourth aspect of the present invention, there is provided a cleaning method of cleaning an ink-jet recording apparatus including: an ink storing part, an ink-jet head, an ink channel provided between the ink storing part and the ink-jet head, and a cleaning liquid-supplying mechanism,

the cleaning method including supplying the cleaning liquid of the first aspect to the ink-jet head and the ink channel, by using the cleaning liquid-supplying mechanism.

[Advantageous Effects of Invention]

The cleaning liquid related to the present invention includes the nonionic surfactant, the first water-soluble organic solvent and the second water-soluble organic solvent such that the above-described conditions (1) to (4) are satisfied, thereby making it possible to suppress any closing of channel and clogging of nozzle during the maintenance of an ink-jet recording apparatus using a water-based ink having a satisfactory wetting property with respect to a hydrophobic recording medium.

[Brief Description of Drawings]

[Fig. 1]

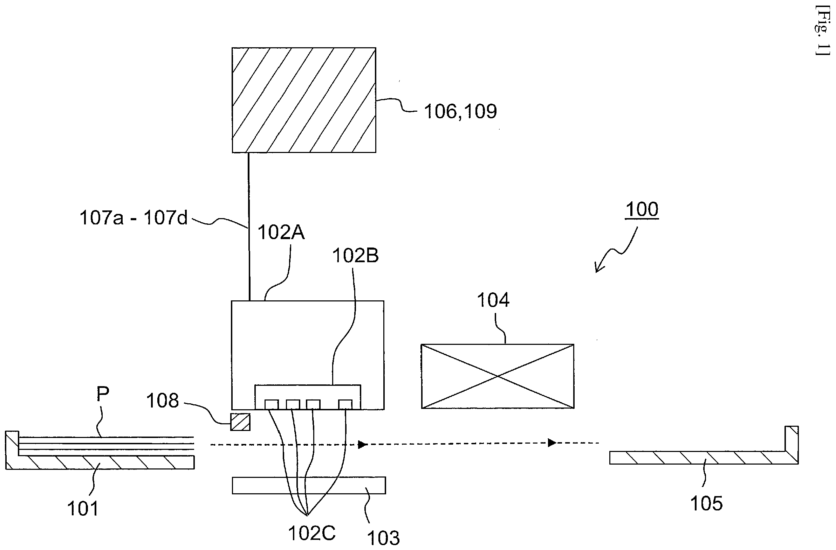

Fig. 1 is a schematic view depicting the configuration of an example of an ink-jet recording apparatus in which a cleaning liquid related to the present invention is usable.

[Description of Embodiments]

In the present invention, a phrase such as a "surfactant having solubility in water at 20°C, that is 0.2% by mass" means a surfactant wherein a maximum soluble amount thereof in 99.8 g of water at 20°C is 0.2 g.
In the present invention, the term "solubility parameter (SP value)" indicates, for example, a value obtained by the following expression by means of the Fedors method, and the unit thereof is $(cal/cm^3)^{1/2}$.

$$\text{SP value} = (\Sigma \Delta ei \: / \: \Sigma \Delta vi)^{1/2}$$

$\Delta ei$ = evaporation energy of an atom and atomic group (cal/mol)
$\Delta vi$ = molar volume $(cm^3/mol)$

A cleaning liquid related to the present invention is suitably usable to perform maintenance of an ink-jet recording apparatus using a water-based ink for ink-jet recording (hereinafter also referred to as a "water-based ink" or an "ink", in some cases) having a satisfactory wetting property with respect to a recording medium having hydrophobicity such as, for example, coated paper, plastic, film, an OHP sheet, etc., but is not limited to or restricted by this usage. The cleaning liquid related to the present invention is usable to perform maintenance also, for example, of an ink-jet recording apparatus using a water-based ink for ink-jet recording suitable for a recoding medium which is different from the hydrophobic recording medium and which includes, for example, regular paper (plain paper), glossy paper, mat paper, etc. In the present invention, the term "coated paper" means, for example, paper obtained by coating, with a coating agent, regular paper made mainly from pulp, such as high-grade print paper and middle-grade print paper. The coating agent is applied to the regular paper to improve its smoothness, whiteness, brightness, etc. The coated paper is specifically exemplified by high-grade coated paper, middle-grade coated paper, etc.
The cleaning liquid related to the present invention will be explained. The cleaning liquid related to the present invention is a cleaning liquid usable for cleaning of an ink-jet recording apparatus and contains a nonionic surfactant, a first water-soluble organic solvent, a second water-soluble organic solvent and water.
The nonionic surfactant is such a hydrophobic surfactant wherein the solubility in the water at 20°C is less than 0.2% by mass, and is hardly dissolved to water. It is allowable to use, as the hydrophobic nonionic surfactant, for example, a commercially available product. The commercially available product is exemplified, for example, by: "EMULGEN (trade name) 108" (polyoxyethylene lauryl ether) which is produced by KAO CORPORATION; "OLFINE (trade name) E1004" (acetylene glycol-based surfactant) which is produced by NISSHIN CHEMICAL CO., LTD.; "NONION (trade name) EH-204" (polyoxyethylene-2-ethylhexyl ether) produced by NOF CORPORATION; etc. In the nonionic surfactant, the solubility in water at 20°C may be less than 0.1% by mass.
Only one kind of the hydrophobic nonionic surfactant as described above may be used singly, or two or more kinds of the hydrophobic nonionic surfactant as described above may be used in combination. A content amount (X) of the hydrophobic nonionic surfactant in the entire amount of the cleaning liquid will be described later on.
It is allowable that only the hydrophobic nonionic surfactant is contained in the cleaning liquid, as the surfactant thereof. Alternatively, the cleaning liquid may further contain, in addition to the hydrophobic nonionic surfactant, another surfactant which is different from the hydrophobic nonionic surfactant.

The first water-soluble organic solvent has the solubility parameter (SP value) (hereinafter referred to as the "SP value" in some cases) which is not less than 13. The first water-soluble organic solvent is exemplified, for example, by glycerol (SP value: 17.5), diethylene glycol (SP value: 14.6), propylene glycol (SP value: 13.5), etc.

Only one kind of the first water-soluble organic solvent as described above may be used singly, or two or more kinds of the first water-soluble organic solvent as described above may be used in combination. A content amount (A) of the first water-soluble organic solvent in the entire amount of the cleaning liquid will be described later on.

The second water-soluble organic solvent has the SP value which is less than 12. The second water-soluble organic solvent is exemplified, for example, by tripropylene glycol (SP value: 11.5), 1,2-hexanediol (SP value: 11.8), triethylene glycol-n-butyl ether (SP value: 9.8), tripropylene glycol-n-butyl ether (SP value: 9.2), etc.

Only one kind of the second water-soluble organic solvent as described above may be used singly, or two or more kinds of the second water-soluble organic solvent as described above may be used in combination. A content amount (B) of the second water-soluble organic solvent in the entire amount of the cleaning liquid will be described later on.

The water-soluble organic solvent contained in the cleaning liquid contains the first water-soluble organic solvent and the second water-soluble organic solvent as described above.

The mass ratio of the first water-soluble organic solvent and the second water-soluble organic solvent relative to the entire amount of the water-soluble organic solvent in the cleaning liquid is, for example, not less than 50% by mass or 100% by mass.

The water is preferably ion-exchanged water or pure water (purified water). The content amount of the water in the entire amount of the cleaning liquid is, for example, in a range of 10% by mass to 90% by mass, or in a range of 20% by mass to 80% by mass. The content amount of the water may be, for example, a balance of the other components.

Although it is preferred that the cleaning liquid does not contain any colorant, the cleaning liquid may contain a colorant. In a case that the cleaning liquid contains a colorant, it is preferred that a content amount of the colorant in the cleaning liquid is an amount to such an extent which does not affect a recorded image. The content amount of the colorant in the entire amount of the cleaning liquid is, for example, not more than 0.1% by mass, or 0% by mass.

The cleaning liquid ink may further include a conventionally known additive, as necessary. The additive is exemplified, for example, by pH-adjusting agents, viscosity-adjusting agents, surface tension-adjusting agents, fungicides, etc. The viscosity-adjusting agents are exemplified, for example, by polyvinyl alcohol, cellulose, water-soluble resin, etc. In view of further suppressing any closing of channel and clogging of nozzle(s), the cleaning liquid ink may not include water-insoluble particles which are similar to those included in a water-based ink described later. The water-insoluble particles may be exemplified, for example, by a pigment, a resin for dispersing pigment (resin dispersant), resin minutes particles (resin fine particles), etc.

The cleaning liquid can be prepared, for example, by uniformly mixing the nonionic surfactant, the first water-soluble organic solvent, the second water-soluble organic solvent and the water by a conventionally known method.

The cleaning liquid satisfies the following conditions (1) to (4). The cleaning liquid contains the nonionic surfactant, the first water-soluble organic solvent and the second water-soluble organic solvent such that the following conditions (1) to (4) are satisfied, thereby making it possible to suppress any closing of channel and clogging of nozzle during the maintenance of an ink-jet recording apparatus using a water-based ink having a satisfactory wetting property with respect to a hydrophobic recording medium.

$$\text{Condition (1): } X \geq 0.1$$

$$\text{Condition (2): } A - B \geq 0$$

$$\text{Condition (3): } B / X \geq 15$$

$$\text{Condition (4): } 10 \leq A + B \leq 60$$

in the conditions (1) to (4),

X: a content amount (% by mass) of the nonionic surfactant in an entire amount of the cleaning liquid,
A: a content amount (% by mass) of the first water-soluble organic solvent in the entire amount of the cleaning liquid, and
B: a content amount (% by mass) of the second water-soluble organic solvent in the entire amount of the cleaning liquid.

The cleaning liquid may further satisfy any one of the following conditions (5) to (7). By satisfying the following conditions (5) to (7), the cleaning liquid is capable of further suppressing any closing of channel and clogging of nozzle during the maintenance of the ink-jet recording apparatus using a water-based ink having a satisfactory wetting property with respect to a hydrophobic recording medium.

$$\text{Condition (5): } 0.1 \leq X \leq 1.5$$

$$\text{Condition (6): } 0 \leq A - B \leq 15$$

$$\text{Condition (7): } 15 \leq B / X \leq 50$$

in the conditions (5) to (7),

> X: the content amount (% by mass) of the nonionic surfactant in the entire amount of the cleaning liquid,
> A: the content amount (% by mass) of the first water-soluble organic solvent in the entire amount of the cleaning liquid, and
> B: the content amount (% by mass) of the second water-soluble organic solvent in the entire amount of the cleaning liquid.

It is allowable to appropriately adjust each of the content amount (X) of the nonionic surfactant, the content amount (A) of the first water-soluble organic solvent and the content amount (B) of the second water-soluble organic solvent so as to satisfy the above-described conditions (1) to (4), for example, as follows.
The content amount (X) of the nonionic surfactant is, for example, in a range of 0.1% by mass to 1.5% by mass, in a range of 0.1% by mass to 1% by mass, or in a range of 0.1% by mass to 0.5% by mass.
The content amount (A) of the first water-soluble organic solvent is, for example, in a range of 5% by mass to 30% by mass, or in a range of 5% by mass to 20% by mass.
The content amount (B) of the second water-soluble organic solvent is, for example, in a range of 5% by mass to 30% by mass, in a range of 5% by mass to 20% by mass, or in a range of 5% by mass to 15% by mass.
The cleaning liquid may be usable together with a water-based ink including water-insoluble particles and water.
The water-insoluble particles may be exemplified, for example, by a pigment (pigment particles), a resin for dispersing pigment (resin dispersant), resin minute particles (resin fine particles), etc.
The pigment is not particularly limited, and may be exemplified, for example, by carbon black, an inorganic pigment, an organic pigment, etc. The carbon black is exemplified, for example, by furnace black, lamp black, acetylene black, channel black, etc. The inorganic pigment is exemplified, for example, by titanium oxide, iron oxide-based inorganic pigments, carbon black-based inorganic pigments, etc. The organic pigment is exemplified, for example, by azo-pigments such as azo lake, insoluble azo-pigment, condensed azo-pigment, chelate azo-pigment, etc.; polycyclic pigments such as phthalocyanine pigment, perylene and perynon pigments, anthraquinone pigment, quinacridone pigment, dioxadine pigment, thioindigo pigment, isoindolinone pigment, quinophthalone pigment, etc.; dye lake pigments such as basic dye type lake pigment, acid dye type lake pigment, etc.; nitro pigments; nitroso pigments; aniline black daylight fluorescent pigment; etc. Further, it is also allowable to use, as the pigment, any pigment different from those listed above and dispersible in water phase. Specific examples of these pigments include, for example, C. I. Pigment Blacks 1, 6, and 7; C. I. Pigment Yellows 1, 2, 3, 12, 13, 14, 15, 16, 17, 55, 74, 78, 150, 151, 154, 180, 185, and 194; C. I. Pigment Oranges 31 and 43; C. I. Pigment Reds 2, 3, 5, 6, 7, 12, 15, 16, 48, 48:1, 53:1, 57, 57:1, 112, 122, 123, 139, 144, 146, 149, 150, 166, 168, 175, 176, 177, 178, 184, 185, 190, 202, 209, 221, 222, 224, and 238; C. I. Pigment Violets 19 and 196; C. I. Pigment Blues 1, 2, 3, 15, 15:1, 15:2, 15:3, 15:4, 16, 22, and 60; C. I. Pigment Greens 7 and 36; solid solutions of the above-listed pigments; etc. The water-based ink may be an ink in which the pigment is dispersed in water with a dispersant. As the dispersant, it is allowable to use, for example, a general polymeric dispersant (resin for dispersing pigment or resin dispersant), etc., and may be prepared in-house. Alternatively, in the water-based ink, the pigment may be subjected to polymer capsulation.
The pigment may be a self-dispersible pigment. The self-dispersible pigment is dispersible in water without using any dispersant, for example, owing to the fact that at least one of a hydrophilic functional group and the salt thereof including, for example, carbonyl group, hydroxyl group, carboxylic acid group, sulfonic acid group (sulfonate group), phosphoric acid group (phosphate group), etc., is introduced into the surfaces of the particles of the pigment by the chemical bond directly or with any group intervening therebetween. It is possible to use self-dispersible pigments wherein the pigment is subjected to the surface treatment by any one of methods described, for example, in Japanese Patent Application Laid-open No. HEI8-3498 corresponding to United States Patent No. 5,609,671, Published Japanese Translation of PCT International Publication for Patent Application No. 2000-513396 corresponding to United States Patent No. 5,837,045, Published Japanese Translation of PCT International Publication for Patent Application No. 2008-524400 corresponding to United States Patent Application Publication No. US 2006/0201380 A1, Published Japanese Translation of PCT International Publication for Patent Application No. 2009-515007 corresponding to United States Patent Application Publications No. US 2007/0100023 A1 and No. US 2007/0100024 A1, Published Japanese Translation of PCT International Publication for Patent Application No. 2011-515535 corresponding to United States Patent Application Publications No. US 2009/0229489 A1, etc. It is possible to use, as a material for the self-dispersible pigment, either one of the inorganic pigment and the organic pigment. Further, a pigment which is suitable for the above-described treatment includes, for example, carbon black such as "MA8" and "MA100" produced by MITSUBISHI CHEMICAL CORPORATION, etc. As the self-dispersible pigment, it is possible, for example, to use a commercially available product. The commercially available product includes, for example, "CAB-O-JET (trade name) 200", "CAB-O-JET (trade name) 250C", "CAB-O-JET (trade name) 260M", "CAB-O-JET (trade name) 270Y", "CAB-O-JET (trade name) 300", "CAB-O-JET (trade name) 400", "CAB-O-JET (trade name) 450C", "CAB-O-JET (trade name) 465M" and "CAB-O-JET (trade name) 470Y" produced by CABOT SPECIALTY CHEMICALS; "BONJET (trade name) BLACK CW-2" and "BONJET (trade name) BLACK CW-3" produced by ORIENT CHEMICAL INDUSTRIES, LTD.; "LIOJET (trade name) WD BLACK 002C" produced by TOYO INK MFG. CO., LTD.; etc.

The solid content amount of the pigment (pigment solid content amount) in the entire amount of the water-based ink is not particularly limited, and may be appropriately determined based on, for example, a desired optical density, chromaticness, etc. The pigment solid content amount is, for example, in a range of 0.1% by mass to 20% by mass, in a range of 1% by mass to 15% by mass, or in a range of 2% by mass to 10% by mass.

The pigment may function, for example, as a colorant.

The water-based ink may contain, as the colorant, a dye instead of, or in addition to, the pigment.

The dye is not specifically limited, and is exemplified, for example, by a direct dye, an acidic dye, a basic dye, a reactive dye, a food dye, etc. Specific examples of the dye include, for example, C. I. Direct Black, C. I. Direct Blue, C. I. Direct Red, C. I. Direct Yellow, C. I. Direct Orange, C. I. Direct Violet, C. I. Direct Brown, C. I. Direct Green; C. I. Acid Black, C. I. Acid Blue, C. I. Acid Red, C. I. Acid Yellow, C. I. Acid Orange, C. I. Acid Violet; C. I. Basic Black, C. I. Basic Blue, C. I. Basic Red, C. I. Basic Violet; C. I. Reactive Blue, C. I. Reactive Red, C. I. Reactive Yellow; C. I. Food Black, C. I. Food Red, C. I. Food Yellow; etc. C. I. Direct Black described above is exemplified, for example, by C. I. Direct Blacks 17, 19, 22, 31, 32, 51, 62, 71, 74, 108, 112, 113, 146, 154, 168, 195, etc. C. I. Direct Blue described above is exemplified, for example, by C. I. Direct Blues 1, 6, 15, 22, 25, 41, 71, 76, 77, 80, 86, 90, 98, 106, 108, 120, 158, 163, 168, 199, 226, etc. C. I. Direct Red described above is exemplified, for example, by C. I. Direct Reds 1, 2, 4, 9, 11, 17, 20, 23, 24, 28, 31, 39, 46, 62, 75, 79, 80, 83, 89, 95, 197, 201, 218, 220, 224, 225, 226, 227, 228, 229, 230, etc. C. I. Direct Yellow described above is exemplified, for example, by C. I. Direct Yellows 8, 11, 12, 24, 26, 27, 28, 33, 39, 44, 50, 58, 85, 86, 87, 88, 89, 98, 100, 110, 132, 142, 173, etc. C. I. Direct Orange described above is exemplified, for example, by C. I. Direct Oranges 34, 39, 44, 46, 60, etc. C. I. Direct Violet described above is exemplified, for example, by C. I. Direct Violets 47, 48, etc. C. I. Direct Brown described above is exemplified, for example, by C. I. Direct Brown 109, etc. C. I. Direct Green described above is exemplified, for example, by C. I. Direct Green 59, etc. C. I. Acid Black described above is exemplified, for example, by C. I. Acid Blacks 2, 7, 24, 26, 31, 48, 51, 52, 63, 110, 112, 115, 118, 156, etc. C. I. Acid Blue described above is exemplified, for example, by C. I. Acid Blues 1, 7, 9, 15, 22, 23, 25, 29, 40, 43, 59, 62, 74, 78, 80, 90, 93, 100, 102, 104, 117, 120, 127, 138, 158, 161, 167, 220, 234, etc. C. I. Acid Red described above is exemplified, for example, by C. I. Acid Reds 1, 6, 8, 9, 13, 14, 18, 26, 27, 32, 35, 37, 42, 51, 52, 80, 83, 85, 87, 89, 92, 94, 106, 114, 115, 133, 134, 145, 158, 180, 198, 249, 256, 265, 289, 315, 317, etc. C. I. Acid Yellow described above is exemplified, for example, by C. I. Acid Yellows 1, 3, 7, 11, 17, 23, 25, 29, 36, 38, 40, 42, 44, 61, 71, 76, 98, 99, etc. C. I. Acid Orange described above is exemplified, for example, by C. I. Acid Oranges 7, 19, etc. C. I. Acid Violet described above is exemplified, for example, by C. I. Acid Violet 49, etc. The C. I. Basic Black is exemplified, for example, by C. I. Basic Black 2, etc. The C. I. Basic Blue is exemplified, for example, by C. I. Basic Blues 1, 3, 5, 7, 9, 24, 25, 26, 28, 29, etc. The C. I. Basic Red is exemplified, for example, by C. I. Basic Reds 1, 2, 9, 12, 13, 14, 37, etc. The C. I. Basic Violet is exemplified, for example, by C. I. Basic Violets 7, 14, 27, etc. C. I. Reactive Blue described above is exemplified, for example, by C. I. Reactive Blues 4, 5, 7, 13, 14, 15, 18, 19, 21, 26, 27, 29, 32, 38, 40, 44, 100, etc. C. I. Reactive Red described above is exemplified, for example, by C. I. Reactive Reds 7, 12, 13, 15, 17, 20, 23, 24, 31, 42, 45, 46, 59, etc. C. I. Reactive Yellow described above is exemplified, for example, by C. I. Reactive Yellows 2, 3, 17, 25, 37, 42, etc. C. I. Food Black described above is exemplified, for example, by C. I. Food Blacks 1, 2, etc. C. I. Food Red described above is exemplified, for example, by C. I. Food Reds 87, 92, 94, etc. C. I. Food Yellow described above is exemplified, for example, by C. I. Food Yellow 3, etc.

It is allowable that one kind of the dye as described above is used singly, or two or more kinds of the dye are used in combination. The content amount of the dye in the entire amount of the water-based ink is, for example, in a range of 0.1% by mass to 20% by mass, in a range of 1% by mass to 15% by mass, or in a range of 2% by mass to 10% by mass.

The water-based ink may be a color ink (chromatic ink) including the colorant, or may be a colorless or achromatic ink (clear ink) not including any colorant.

The glass-transition temperature (Tg) of the resin minute particles is, for example, in a range of -60°C to 150°C, in a range of 20°C to 100°C, or is not more than 55°C. The resin minute particles may be, for example, resin minute particles contained in a resin emulsion. The term "resin emulsion" means a resin emulsion composed of, for example, the resin minute particle and a disperse medium (for example, water, etc.); in the resin emulsion, the resin minute particles are dispersed with a specific particle diameter (particle size) in the disperse medium, rather than in a dissolved state in the disperse medium. In the present specification, the resin particles included in the resin emulsion are defined as "emulsion particles". The resin minute particles may be exemplified, for example, by acrylic acid-based resin, maleate ester-based resin, vinyl acetate-based resin, carbonate-based resin, styrene-based resin, ethylene-based resin, propylene-based resin, urethane-based resin, and copolymer resin thereof. Only one kind of the resin minute particles as described above may be used singly, or two or more kinds of the resin minute particles as described above may be used in combination.

As the resin emulsion, it is allowable to use, for example, a commercially available product. The commercially available product is exemplified, for example, by "MOWINYL (trade name) 6969D" (acrylic resin emulsion) (Tg: 71 °C), "MOWINYL (trade name) 5450" (Tg: 53 °C) and "MOWINYL (trade name) DM772" (Tg: 22 °C) produced by JAPAN COATING RESIN CO., LTD.; "POLYSOL (trade name) AP-3770 (styrene-acrylic resin emulsion) produced by SHOWA DENKO K.K.; "SUPERFLEX (trade name) 150" (urethane resin emulsion) (Tg: 40 °C) produced by DKS CO., LTD. (DAIICHI KOGYO SEIYAKU CO., LTD.); etc.

The mean particle diameter of the resin minute particles is, for example, in a range of 5 nm to 500 nm, in a range of 20 nm to 300 nm or in a range of 30 nm to 200 nm. The mean particle diameter can be measured, for example, by using a dynamic light scattering particle diameter distribution measuring apparatus "LB-550" (product name) produced by HORIBA, LTD., as the arithmetic mean diameter. The mean particle diameter may be a mean particle diameter (intensity mean particle diameter) calculated based on an intensity-based particle size distribution (light scattering intensity-based particle size distribution).

The content amount of the resin minute particles in the entire amount of the water-based ink is, for example, in a range of 0.1% by mass to 30% by mass, in a range of 0.5% by mass to 20% by mass, or in a range of 1% by mass to 10% by mass. One kind of the resin minute particles described above may be used singly, or two or more kinds of the resin minute particles as described above may be used in combination.

The water in the above-described water-based ink is preferably ion-exchanged water or pure water (purified water). The content amount of the water in the entire amount of the water-based ink is, for example, in a range of 10% by mass to 90% by mass, or in a range of 20% by mass to 80% by mass. The content amount of the water may be, for example, a balance of the other components.

The water-based ink may further contain a surfactant and a water-soluble organic solvent which are similar to those in the cleaning liquid described above.

The water-based ink may further include a conventionally known additive, as necessary. The additive is exemplified, for example, by pH-adjusting agents, viscosity-adjusting agents, surface tension-adjusting agents, fungicides, etc. The viscosity-adjusting agents are exemplified, for example, by polyvinyl alcohol, cellulose, water-soluble resin, etc.

The water-based ink can be prepared, for example, by uniformly mixing the water-insoluble particles, the water and an optionally other additive(s) as necessary, by a conventionally known method, and then removing any nondissolved matter, with a filter, etc.

According to the present invention, a set of the above-described cleaning liquid and the above-described waterbased ink can also be provided.

For example, the cleaning liquid is usable for cleaning the ink-jet head, the ink channel, and the wiper which makes contact with the nozzle-formation surface of the ink-jet head having nozzles formed therein so as to wipe the ink off from the nozzle-formation surface, etc., in the ink-jet recording apparatus.

Next, an ink-jet recording apparatus and a cleaning method of the ink-jet recording apparatus related to the present invention will be explained.

The ink-jet recording apparatus related to the present invention is an ink-jet recording apparatus characterized by including: an ink storing part, an ink-jet head, and an ink channel provided between the ink storing part and the inkjet head, and being configured to discharge an ink stored in the ink storing part by the ink-jet head; the ink-jet recording apparatus further including a cleaning liquid-supplying mechanism, wherein the cleaning liquid-supplying mechanism is capable of supplying, to the ink-jet head and the ink channel, the cleaning liquid related to the present invention. The ink-jet recording apparatus related to the present invention may further include a wiper configured to make contact with a nozzle-formation surface, of the ink-jet head, having nozzles formed therein, so as to wipe the ink off from the nozzle-formation surface, and the cleaning liquid-supplying mechanism may be capable of supplying the cleaning liquid related to the present invention to the wiper. Further, as will be described later on, the ink-jet recording apparatus related to the present invention may further include a drying mechanism configured to dry a recording part or recording portion recorded with the ink.

The cleaning method of cleaning an ink-jet recording apparatus related to the present invention is a cleaning method of cleaning an ink-jet recording apparatus including: an ink storing part, an ink-jet head, and an ink channel provided between the ink storing part and the ink-jet head, the method being characterized by supplying the cleaning liquid related to the present invention by a cleaning liquid-supplying mechanism to thereby clean the ink-jet head and the ink channel. In the cleaning method related to the present invention, the ink-jet recording apparatus further includes a wiper configured to make contact with a nozzle-formation surface, of the ink-jet head, having nozzles formed therein, so as to wipe the ink off from the nozzle-formation surface; the cleaning method may clean the wiper by supplying the cleaning liquid, to the wiper, by the cleaning liquid-supplying mechanism.

Fig. 1 schematically depicts an exemplary configuration of the ink-jet recording apparatus related to the present invention. As depicted in Fig. 1, an ink-jet recording apparatus 100 includes a feed tray 101, a conveyance mechanism (not depicted) such as a roller, recording mechanisms 102A and 102B, a platen 103, a drying mechanism 104, a discharge tray 105, and an ink storing part 106 such as ink cartridges or ink tanks. The feed tray 101 can support a plurality of pieces of a recording medium P (e.g., a plurality of pieces of coated paper sheet) stacked thereon.

The recording mechanism includes a carriage 102A and an ink-jet head (ink discharging mechanism, ink-jetting mechanism) 102B. The carriage 102A is supported by two guide rails (not depicted) extending orthogonally with respect to a conveyance direction of the recording medium P. The two guide rails are supported by a casing (not depicted) of the ink-jet recording apparatus 100. The carriage 102A is connected to a well-known belt mechanism (not depicted) provided in the two guide rails. The belt mechanism is driven by a carriage motor (not depicted). The carriage motor is driven to thereby cause the carriage 102A connected to the belt mechanism to reciprocate (move reciprocatingly) in an orthogonal direction which is orthogonal with respect to the conveyance direction of the recording medium P.

Further, four ink tubes (ink channels) 107a to 107d connecting the ink storing part 106 and the ink-jet head 102B, and a flexible flat cable (not depicted) electrically connecting a control board (not depicted) and the ink-jet head 102B extend from the carriage 102A. Four colors of water-based inks (yellow, magenta, cyan, and black) stored in the ink storing part 106 are supplied to the ink-jet head 102B via the four ink tubes 107a to 107d. For example, at least one of the four water-based color inks is the water-based ink for ink-jet recording which constructs a set, together with the cleaning liquid related to the present invention. A control signal outputted from the control board is transmitted to the ink-jet head 102B via the flexible flat cable.

As depicted in Fig. 1, the carriage 102A has the ink-jet head 102B mounted or installed therein. A plurality of nozzles 102C are formed in a lower surface of the ink-jet head 102B. A front end of each of the plurality of nozzles 102C is exposed from the carriage 102A and the lower surface of the ink-jet head 102B. The ink-jet head 102B includes an actuator (not depicted) which applies force for jetting the water-based ink(s) which is (are) supplied from the ink storing part 106 to the ink-jet head 102B via the ink tube(s) 107a to 107d. The actuator may be an actuator of any system, such as a piezoelectric element system, a thermal ink-jet system, an electrostatic attraction system, etc. The ink-jet head 102B jets or discharges the water-based ink, as fine or minute ink droplets of the water-based ink, from the plurality of nozzles 102C during a process in which the carriage 102A reciprocates in the orthogonal direction orthogonal with respect to the conveyance direction of the recording medium P. With this, an image is recorded on the recording medium P. The ink-jet recording apparatus 100 may be provided with a wiper 108 configured to perform wiping of a surface, having the plurality of nozzles 102C formed therein, of the ink-jet head 102B which is returned to a reset position in a case that recording is finished. The platen 103 is arranged so as to face the recording mechanism, and supports the recording medium P conveyed from the feed tray 101.

The drying mechanism 104 heats and dries a recording part of the recording medium P. The drying temperature during the drying can be adjusted as appropriate by changing the setting of the drying mechanism 104. Specifically, the drying temperature may be, for example, in a range of 20°C to 200°C or in a range of 50°C to 100°C. The drying time may be also adjusted as appropriate by changing the setting of the drying mechanism 104. For example, the drying time may be in a range of a second(s) exceeding 0 (zero) seconds to not more than 300 seconds, in a range of 0.1 seconds to 60 seconds, or in a range of 30 second to 60 seconds. Any drying mechanism which is capable of drying the recording part may be used as the drying mechanism 104. Examples of the drying mechanism 104 include commercially available dryers, IR heaters, ovens, belt conveyer ovens, irons, hot presses, etc. A non-contact drying mechanism, such as the drier, IR heater, the oven, the belt conveyer oven, etc., which dries the recording part of the recording medium P without contacting with the recording part is preferably used.

The recording medium P after recording and drying is conveyed to the discharge tray 105.

The cleaning liquid-supplying mechanism supplies the cleaning liquid to the ink-jet head 102B, the ink tube(s) 107a to 107d, the wiper 108, etc., and performs the cleaning of the ink-jet head 102B, the ink tube(s) 107a to 107d, the wiper 108, etc., with the cleaning liquid. The cleaning liquid-supplying mechanism may be any mechanism provided that the mechanism is capable of supplying the cleaning liquid to the ink-jet head 102B, the ink tube(s) 107a to 107d, the wiper 108, etc. For example, it is allowable to use, as the cleaning liquid-supplying mechanism, a cleaning liquid-storing part 109 configure to store the cleaning liquid therein. It is allowable that the ink tubes (ink channels) 107a to 107d are connected to the cleaning liquid-storing part 109, instead of being connected to the ink storing part 106 as depicted in Fig. 1, and to supply the cleaning liquid, rather than the ink, to the ink-jet head 102B, the ink tubes 107a to 107d and the wiper 108 to thereby clean the ink-jet head 102B, the ink tubes 107a to 107d and the wiper 108.

[EXAMPLES]

Next, Examples of the present invention will be explained together with Comparative Examples. Note that the present invention is not limited to and restricted by Examples and Comparative Examples described below.

<Preparation of Resin Dispersant>

135g of Terathane (trade name) 650 (polyether diol produced by INVISTA (Wichita, KS), 54g of 2,2'-dimethylolpropionic acid (DMPA), 132g of sulfolane and 0.06g of dibutyltin dilaurate (DBTDL) were added to a flask provided with a dropping funnel, a condenser and an agitator (stirring device) under an atmosphere of nitrogen, then were heated up to 60°C while being mixed, and then were mixed sufficiently; thus, a mixture was obtained. To the obtained mixture, 164g of m-tetramethylene xylylenediisocyanate (TMXDI) was added with the dropping funnel, and remaining TMXDI in the dropping funnel was rinsed with 15g of sulfolane into the flask. The temperature was raised up to 100°C, and was maintained at 100°C until the content rate of isocyanate reached to be not more than 1.3% by mass. Next, the temperature was lowered up to 60°C, then 12.9g of diethanolamine (DEA) was added to the mixture over 5 (five) minutes with the dropping funnel, and the temperature was maintained at 60°C until remaining DEA in the dropping funnel was rinsed with 5g of sulfolane into the flask. Furthermore, the temperature was maintained at 60°C for one hour, then 376g of a 3% by mass aqueous solution of potassium hydroxide was added to the mixture over 10 (ten) minutes with the dropping funnel, then 570g of deionized water was further added to the mixture. Then, the temperature was maintained at 60°C for one hour, and cooling to the room temperature was performed. Thus, a resin dispersant with 24% by mass of solid content was obtained.

<Preparation of Pigment Dispersion Liquid A>

The resin dispersant was neutralized with either one of potassium hydroxide and amine in order to increase the solubility in water and to make the resin dispersant to easily dissolve to water. Then, a microfluidizer of highpressure compressed air system (Model name: M-110Y, produced by MICROFLUIDICS (Newton, Massachusetts)) was used so as to produce a mixture in which content amount of carbon black was approximately 27% by mass and the mass ratio (P/D) of the content amount (P) of the carbon black to the content amount (D) of the resin dispersant was P/D = 3. Then, deionized water was added to the mixture so that the content amount of the carbon black was made to be approximately 24% by mass for the suitable medium mill grinding condition; and the mixture was milled (pulverized) for 4 (four) hours. After the milling, the deionized water was added, and the mixture was mixed sufficiently. Then, after any impurity was filtered and removed, dilution with deionized water was performed; thus, a pigment dispersion liquid A was obtained.

<Preparation of Pigment Dispersion Liquid B>

A pigment dispersion Liquid B was obtained similarly to the above-described preparation of the pigment dispersion liquid A, except that an Eiger Minimill (Model name: M250, produced by VSE EXP, EIGER MACHINERY INC. (Chicago, Illinois)) was used, instead of using the microfluidizer of highpressure compressed air system, and that a phthalocyanine pigment was used instead of using the carbon black.

<Preparation of Water-based Inks 1 to 3>

Ingredients or components, except for CAB-O-JET (trade name) 300 and the pigment dispersion liquid A or B, which were included in Water-based ink composition (TABLE 1) were mixed uniformly or homogeneously; and thus an ink solvent was obtained. Subsequently, the ink solvent was added to CAB-O-JET (trade name) 300 and the pigment dispersion liquid A or B, followed by being mixed uniformly, and thus a mixture was obtained. After that, the obtained mixture was filtrated through a cellulose acetate membrane filter (pore size 3.00 µm) produced by TOYO ROSHI KAISHA, LTD., and thus water-based inks 1 to 3 for ink-jet recording as indicated in TABLE 1 was obtained.

<Preparation of Water-based Ink 4>

Ingredients or components in Water-based ink composition (TABLE 1) were mixed uniformly or homogeneously; and thus a mixture was obtained. After that, the obtained mixture was filtrated through a polytetrafluoroethylene (PTFE) membrane filter (pore size 0.20 $\mu$m) produced by TOYO ROSHI KAISHA, LTD., and thus the water-based ink 4 for ink-jet recording as indicated in TABLE 1 was obtained. The water-based ink 4 is a colorless or achromatic ink (clear ink) not including any colorant.

TABLE 1 (following) - LEGEND

*1: Self-dispersible pigment; produced by CABOT SPECIALTY CHEMICALS, INC.; numerals in TABLE 1 indicate pigment solid content amount.

*2: Water dispersion of carbon black (containing 1.5% by mass of resin dispersant); numerals in TABLE 1 indicate pigment solid content amount.

*3: Water dispersion of phthalocyanine pigment (containing 1% by mass of resin dispersant); numerals in TABLE 1 indicate pigment solid content amount.

*4: Resin emulsion; produced by DAI-ICHI KOGYO SEIYAKU CO., LTD. ; numerals in TABLE 1 indicate the active ingredient amount (solid content amount).

*5: Resin emulsion; produced JAPAN COATING RESIN CO., LTD.; numerals in TABLE 1 indicate the active ingredient amount (solid content amount).

*6: Nonionic surfactant, the solubility thereof in water at 20 °C being less than 0.2% by mass; produced by NISSIN CHEMICAL INDUSTRY CO., LTD., numerals in TABLE 1 indicate the active ingredient amount.

TABLE 1

| Water-based ink composition (% by mass) | Water-based ink | | | |
|---|---|---|---|---|
| | 1 | 2 | 3 | 4 |
| CAB-O-JET (trade name) 300 (*1) | 3.75 | - | - | - |
| Pigment dispersion liquid A (*2) | - | 4.5 | - | - |
| Pigment dispersion liquid B (*3) | - | - | 3 | - |
| Propylene glycol | 30 | 30 | 30 | 30 |
| Tripropylene glycol | 3 | 3 | 3 | 3 |
| SUPERFLEX (trade name) 150 (*4) | 16.7 | - | - | - |
| MOWINYL (trade name) 6969D (*5) | - | 12 | 12 | 12 |
| OLFINE (trade name) E1004 (*6) | 2 | 2 | 2 | 2 |
| Water | balance | balance | balance | balance |

<Examples 1 to 8 and Comparative Examples 1 to 5>

Components which were included in Cleaning Liquid Composition (TABLE 2) as indicated below were mixed uniformly or homogeneously; and thus a cleaning liquid in each of Examples 1 to 8 and Comparative Examples 1 to 5 as indicated in TABLE 2 were obtained.

With respect to the cleaning liquids of Examples 1 to 8 and Comparative examples 1 to 5, (a) evaluation of cleaning of wiper and (b) evaluation of aggregation by contact with water-based ink were conducted by the following methods.

(a) Evaluation of cleaning of wiper

A water-repelling treated surface of a wiper wetted by the cleaning liquid of each of Examples 1 to 8 and Comparative Examples 1 to 5 was visually observed for the presence of any remaining of liquid in the water-repelling treated surface, and evaluation was made based on the following evaluation criterion.

<Evaluation of cleaning of wiper: evaluation criterion>

AA: Any conspicuous remaining of liquid was not present in the water-repelling treated surface.
A: A very slight amount of liquid remained on the water-repelling treated surface.
B: A much amount of liquid remained on the water-repelling treated surface.

(b) Evaluation of aggregation by contact with water-based ink

The cleaning liquid of each of Examples 1 to 8 and Comparative Examples 1 to 5 which was subjected to evaporation so that approximately 30% of the cleaning liquid was evaporated was brought into contact with any one of the water-based inks 1 to 4. The contact interface between the cleaning liquid and the water-based ink was visually observed, and evaluation was made based on the following evaluation criterion.

<Evaluation of aggregation by contact with water-based ink: evaluation criterion>

AA: Any agglomerate was not present in the contact interface.
A: A very slight amount of agglomerate was present in the contact interface.
B: A large agglomerate was present in the contact interface.

The cleaning liquid compositions and the evaluation results of the above-described evaluation in Examples 1 to 8 and Comparative Examples 1 to 5 are indicated in TABLE 2 as follows.

TABLE 2 (following) - LEGEND

*7: Surfactant, the solubility thereof in water at 20 °C being less than 0.2% by mass; produced by KAO CORPORATION; numerals in TABLE 2 indicate the active ingredient amount.

*6: Nonionic surfactant, the solubility thereof in water at 20 °C being less than 0.2% by mass; produced by NISSIN CHEMICAL INDUSTRY CO., LTD., numerals in TABLE 2 indicate the active ingredient amount.

*8: Nonionic surfactant, the solubility thereof in water at 20 °C being less than 0.2% by mass; produced by NOF CORPORATION, numerals in TABLE 2 indicate the active ingredient amount.

*9: Surfactant, the solubility thereof in water at 20 °C exceeding 0.2% by mass; produced by KAO CORPORATION, numerals in TABLE 2 indicate the active ingredient amount.

*10: Surfactant, the solubility thereof in water at 20 °C exceeding 0.2% by mass; produced by NISSIN CHEMICAL INDUSTRY CO., LTD., numerals in TABLE 2 indicate the active ingredient amount.

TABLE 2

| Cleaning liquid composition (% by mass) | | | Examples | | | | | | | |
|---|---|---|---|---|---|---|---|---|---|---|
| | | | 1 | 2 | 3 | 4 | 5 | 6 | 7 | 8 |
| Nonionic surfactant (X) | EMULGEN (trade name) 108 (*7) | 1 | - | - | - | - | 0.5 | 1 | - |
| | OLFINE (trade name) E1004 (*6) | - | 0.5 | - | 0.1 | 1 | - | - | 1.5 |
| | NONION (trade name) EH-204 (*8) | - | - | 0.5 | - | - | - | - | - |
| Nonionic surfactant | EMULGEN (trade name) 109P (*9) | 1 | - | - | - | - | - | 1 | - |
| | OLFINE (trade name) E1010 (*10) | - | 1 | - | 1 | 1 | - | - | 1 |
| First water-soluble organic solvent (A) | Glycerol | 20 | 15 | 20 | - | 30 | - | - | 20 |
| | Diethylene glycol | - | 5 | - | - | - | - | 20 | - |
| | Propylene glycol | - | - | - | 5 | - | 30 | - | 10 |
| Second water-soluble organic solvent (B) | Tripropylene glycol | 15 | - | 20 | 5 | 20 | - | 10 | 15 |
| | 1,2-hexanediol | - | 10 | - | - | 10 | - | - | 10 |
| | Triethylene glycol-n-butyl ether | 5 | - | - | - | - | 15 | 5 | - |
| | Tripropylene glycol-n-butyl ether | - | 1 | - | - | - | - | - | 2 |
| | Water | balance | balance | balance | balance | balance | balance | balance | balance |
| X | | 1 | 0.5 | 0.5 | 0.1 | 1 | 0.5 | 1 | 1.5 |
| A - B | | 0 | 9 | 0 | 0 | 0 | 15 | 5 | 3 |
| B / X | | 20 | 22 | 40 | 50 | 30 | 30 | 15 | 18 |
| A + B | | 40 | 31 | 40 | 10 | 60 | 45 | 35 | 57 |
| (a) Cleaning of Wiper | | AA | AA | AA | A | A | A | A | A |
| (b) Aggregation by contact with water-based ink | | | | | | | | | |
| Water-based ink 1 | | A | A | AA | A | A | A | A | A |
| Water-based ink 2 | | AA | A | AA | A | A | AA | A | A |
| Water-based ink 3 | | AA | A | A | AA | A | AA | A | A |
| Water-based ink 4 | | AA | AA | AA | A | A | A | A | A |

TABLE 2 (continued)

| Cleaning liquid composition (% by mass) | | | Comparative Examples | | | | |
|---|---|---|---|---|---|---|---|
| | | | 1 | 2 | 3 | 4 | 5 |
| Nonionic surfactant (X) | EMULGEN (trade name) 108 (*7) | | 1 | - | - | 1.5 | - |
| | OLFINE (trade name) E1004 (*6) | | - | 1.5 | 1 | - | 2 |
| | NONION (trade name) EH-204 (*8) | | - | - | - | - | - |
| Nonionic surfactant | EMULGEN (trade name) 109P (*9) | | 1 | 1 | 2 | 1 | 2 |
| | OLFINE (trade name) E1010 (*10) | | - | - | - | - | - |
| First water-soluble organic solvent (A) | Glycerol | | 30 | - | - | 40 | 25 |
| | Diethylene glycol | | - | - | - | 20 | - |
| | Propylene glycol | | - | - | 40 | - | - |
| Second water-soluble organic solvent (B) | Tripropylene glycol | | - | 10 | 10 | - | - |
| | 1,2-hexanediol | | - | 10 | - | 10 | 25 |
| | Triethylene glycol-n-butyl ether | | - | - | - | 5 | - |
| | Tripropylene glycol-n-butyl ether | | - | - | - | - | - |
| Water | | | balance | balance | balance | balance | balance |
| X | | | 1 | 1.5 | 1 | 1.5 | 2 |
| A - B | | | 30 | -20 | 30 | 45 | 0 |
| B / X | | | 0 | 13.3 | 10 | 10 | 12.5 |
| A + B | | | 30 | 20 | 50 | 75 | 50 |
| (a) Cleaning of Wiper | | | B | A | A | B | B |
| (b) Aggregation by contact with water-based ink | | Water-based ink 1 | B | B | B | B | B |
| | | Water-based ink 2 | B | B | B | B | B |
| | | Water-based ink 3 | B | A | A | B | B |
| | | Water-based ink 4 | A | A | B | B | B |

As indicated in TABLE 2, in Examples 1 to 8, the evaluation results were satisfactory in relation to (a) the cleaning of wiper and (b) the aggregation by contact with water-based ink.

On the other hand, Comparative Examples 1 and 5 in each of which B / X < 15 and which did not satisfy the above-described condition (3) had unsatisfactory result in relation to (a) the cleaning of wiper, and also had unsatisfactory result in (b) the aggregation by contact with a part or all of the water-based inks 1 to 4. Further, Comparative Example 2 in which A - B < 0 and B / X < 15, and which did not satisfy the above-described conditions (2) and (3) had unsatisfactory result in (b) the aggregation by contact with a part of the water-based inks 1 to 4. Furthermore, Comparative Example 3 in which B / X < 15 and which did not satisfy the above-described condition (3) had unsatisfactory result in (b) the aggregation by contact with a part of the water-based inks 1 to 4. Moreover, Comparative Example 4 in which B / X < 15 and A + B > 60, and which did not satisfy the above-described conditions (3) and (4) had unsatisfactory result in relation to (a) the cleaning of wiper, and also had unsatisfactory result in (b) the aggregation by contact with all of the water-based inks 1 to 4.

[INDUSTRIAL APPLICABILITY]

As described above, the cleaning liquid related to the present invention is capable of suppressing any closing of channel and clogging of nozzle during the maintenance of an ink-jet recording apparatus using a water-based ink having a satisfactory wetting property with respect to a hydrophobic recording medium. The usage of the cleaning liquid related to the present invention is not particularly limited to the maintenance of the ink-jet recording apparatus using the water-based ink having the satisfactory wetting property with respect to a hydrophobic recording medium such as the coated paper, etc., and is widely applicable to the maintenance of an ink-jet recording apparatus using a water-based ink suitable for ink-jet recording on a variety of kinds of recording medium including, for example, plain paper (regular paper), glossy paper, mat paper, etc.

[Reference Signs List]

| 100 | ink-jet recording apparatus |
| 101 | feed tray |
| 102A | carriage |
| 102B | ink-jet head (ink discharging mechanism) |
| 102C | nozzle |
| 103 | platen |
| 104 | drying mechanism |
| 105 | discharge tray |

Claims

1. A cleaning liquid usable for cleaning of an ink-jet recording apparatus, the cleaning liquid comprising:

a nonionic surfactant, solubility of the nonionic surfactant in water at 20°C being less than 0.2% by mass;
a first water-soluble organic solvent of which solubility parameter is not less than 13, wherein the solubility parameter (SP) is defined as

$$SP = (\Sigma \Delta ei \ / \ \Sigma \Delta vi)^{1/2}$$

$$\Delta ei = \text{evaporation energy of an atom and atomic group (cal/mol)}$$

$$\Delta vi = \text{molar volume (cm}^3\text{/mol);}$$

a second water-soluble organic solvent of which solubility parameter is less than 12; and
water,
wherein the cleaning liquid satisfies the following conditions (1) to (4):

$$\text{Condition (1): } X \geq 0.1$$

$$\text{Condition (2): } A - B \geq 0$$

$$\text{Condition (3): } B \ / \ X \geq 15$$

$$\text{Condition (4): } 10 \leq A + B \leq 60$$

in the conditions (1) to (4),

X: a content amount (% by mass) of the nonionic surfactant in an entire amount of the cleaning liquid,

A: a content amount (% by mass) of the first water-soluble organic solvent in the entire amount of the cleaning liquid, and

B: a content amount (% by mass) of the second water-soluble organic solvent in the entire amount of the cleaning liquid,

wherein the first water-soluble organic solvent includes at least one selected from the group consisting of: glycerol, diethylene glycol and propylene glycol, and

wherein the second water-soluble organic solvent includes at least one selected from the group consisting of: tripropylene glycol, 1,2-hexanediol, triethylene glycol-n-butyl ether and tripropylene glycol-n-butyl ether.

2. The cleaning liquid according to claim 1, usable together with a water-based ink for ink-jet recording including water-insoluble particles and water.

3. The cleaning liquid according to any one of claims 1 to 2, usable for cleaning at least one selected from the group consisting of: an ink-jet head, an ink channel and a wiper configured to make contact with a nozzle-formation surface of the ink-jet head and to wipe off an ink from the nozzle-formation surface, in the ink-jet recording apparatus.

4. A set comprising:

the cleaning liquid as defined in any one of claims 1 to 3; and

a water-based ink for ink-jet recording including water-insoluble particles and water.

5. The set according to claim 4, wherein the water-insoluble particles are pigment particles and/or resin minute particles.

6. An ink-jet recording apparatus comprising:

an ink storing part configured to store an ink therein;

an ink-jet head configured to discharge the ink stored in the ink storing part;

an ink channel provided between the ink storing part and the ink-jet head;

a cleaning liquid-storing part storing a cleaning liquid therein; and

a cleaning liquid-supplying mechanism configured to supply, to the ink-jet head and the ink channel, the cleaning liquid,

wherein the cleaning liquid comprises:

a nonionic surfactant, solubility of the nonionic surfactant in water at 20°C being less than 0.2% by mass;

a first water-soluble organic solvent of which solubility parameter (SP) is not less than 13, wherein the solubility parameter (SP) is defined as

$$SP = (\Sigma\Delta ei \, / \, \Sigma\Delta vi)^{1/2}$$

$$\Delta ei = \text{evaporation energy of an atom and atomic group (cal/mol)}$$

$$\Delta vi = \text{molar volume (cm}^3\text{/mol)};$$

a second water-soluble organic solvent of which solubility parameter (SP) is less than 12; and

water, and

wherein the cleaning liquid satisfies the following conditions (1) to (4):

$$\text{Condition (1): } X \geq 0.1$$

$$\text{Condition (2): } A - B \geq 0$$

$$\text{Condition (3): } B / X \geq 15$$

$$\text{Condition (4): } 10 \leq A + B \leq 60$$

in the conditions (1) to (4),

X: a content amount (% by mass) of the nonionic surfactant in an entire amount of the cleaning liquid,

A: a content amount (% by mass) of the first water-soluble organic solvent in the entire amount of the cleaning liquid, and

B: a content amount (% by mass) of the second water-soluble organic solvent in the entire amount of the cleaning liquid, wherein the first water-soluble organic solvent includes at least one selected from the group consisting of: glycerol, diethylene glycol and propylene glycol, and wherein the second water-soluble organic solvent includes at least one selected from the group consisting of: tripropylene glycol, 1,2-hexanediol, triethylene glycol-n-butyl ether and tripropylene glycol-n-butyl ether.

7. The ink-jet recording apparatus according to claim 6, further comprising a wiper configured to make contact with a nozzle-formation surface of the ink-jet head and to wipe off the ink from the nozzle-formation surface, wherein the cleaning liquid-supplying mechanism is configured to supply the cleaning liquid to the wiper.

8. The ink-jet recording apparatus according to claim 6 or 7, further comprising a drying mechanism configured to dry a recording part recorded with the ink.

9. A cleaning method of cleaning an ink-jet recording apparatus according to claim 6, the cleaning method comprising supplying the cleaning liquid to the ink-jet head and the ink channel, by using the cleaning liquid-supplying mechanism.

10. The cleaning method according to claim 9, wherein the ink-jet recording apparatus further includes a wiper configured to make contact with a nozzle-formation surface of the ink-jet head and to wipe off an ink from the nozzle-formation surface; and the cleaning method further comprises supplying the cleaning liquid to the wiper by using the cleaning liquid-supplying mechanism.

**Patentansprüche**

1. Reinigungsflüssigkeit, die zur Reinigung einem Tintenstrahlaufzeichnungsgerät verwendbar ist, wobei die Reinigungsflüssigkeit aufweist:

ein nichtionisches Tensid, wobei die Löslichkeit des nichtionischen Tensids in Wasser bei 20°C weniger als 0,2 Masse-% beträgt;

ein erstes wasserlösliches organisches Lösungsmittel, dessen Löslichkeitsparameter nicht weniger als 13 beträgt, wobei der Löslichkeitsparameter (SP) definiert ist als

$$SP = (\Sigma \Delta ei \, / \, \Sigma \Delta vi)^{1/2}$$

$\Delta ei$ = Verdampfungsenergie eines Atoms und einer Atomgruppe (cal/mol)

$\Delta vi$ = molares Volumen (cm3/mol);

ein zweites wasserlösliches organisches Lösungsmittel, dessen Löslichkeitsparameter kleiner als 12 ist; und Wasser,

wobei die Reinigungsflüssigkeit die folgenden Bedingungen (1) bis (4) erfüllt:

$$\text{Bedingung (1): } X \geq 0.1$$

$$\text{Bedingung (2): } A - B \geq 0$$

Bedingung (3): B / X ≥ 15

Bedingung (4): 10 ≤ A + B ≤ 60

in den Bedingungen (1) bis (4),

X: eine Gehaltsmenge (Masse-%) des nichtionischen Tensids in einer Gesamtmenge der Reinigungsflüssigkeit,

A: eine Gehaltsmenge (Masse-%) des ersten wasserlöslichen organischen Lösungsmittels in der Gesamtmenge der Reinigungsflüssigkeit, und

B: eine Gehaltsmenge (Masse-%) des zweiten wasserlöslichen organischen Lösungsmittels in der Gesamtmenge der Reinigungsflüssigkeit,

wobei das erste wasserlösliche organische Lösungsmittel mindestens eines enthält, ausgewählt von der Gruppe bestehend aus: Glycerin, Diethylenglykol und Propylenglykol, und

wobei das zweite wasserlösliche organische Lösungsmittel mindestens eines enthält, ausgewählt von der Gruppe bestehend aus: Tripropylenglykol, 1,2-Hexandiol, Triethylenglykol-n-Butylether und Tripropylenglykol-n-Butylether.

2. Reinigungsflüssigkeit gemäß Anspruch 1, verwendbar zusammen mit einer Tinte auf Wasserbasis für die Tintenstrahlaufzeichnung, die wasserunlösliche Partikel und Wasser enthält.

3. Reinigungsflüssigkeit gemäß einem der Ansprüche 1 bis 2, verwendbar zum Reinigen von mindestens einem, ausgewählt aus der Gruppe, bestehend aus: einem Tintenstrahlkopf, einem Tintenkanal und einem Wischer, der so konfiguriert ist, dass er mit einer Düsenformungsoberfläche des Tintenstrahlkopfes in Kontakt kommt und eine Tinte von der Düsenformungsoberfläche abwischt, in dem Tintenstrahlaufzeichnungsgerät.

4. Set aufweisend:

die Reinigungsflüssigkeit, wie in einem der Ansprüche 1 bis 3 definiert; und

eine Tinte auf Wasserbasis für die Tintenstrahlaufzeichnung, einschließlich wasserunlöslicher Partikel und Wasser.

5. Set gemäß Anspruch 4, wobei die wasserunlöslichen Teilchen Pigmentteilchen und/oder winzige Harzteilchen sind.

6. Tintenstrahlaufzeichnungsgerät, das aufweist:

einen Tintenspeicherteil, der so konfiguriert ist, dass er eine Tinte darin speichert;

einen Tintenstrahlkopf, der so konfiguriert ist, dass er die in dem Tintenspeicherteil gespeicherte Tinte ausstößt;

einen Tintenkanal, der zwischen dem Tintenspeicherteil und dem Tintenstrahlkopf bereitgestellt wird; ein Reinigungsflüssigkeitsspeicherteil, in dem eine Reinigungsflüssigkeit gespeichert ist; und

einen Mechanismus zum Zuführen von Reinigungsflüssigkeit, der so konfiguriert ist, dass er dem Tintenstrahlkopf und dem Tintenkanal die Reinigungsflüssigkeit zuführt,

wobei die Reinigungsflüssigkeit aufweist:

ein nichtionisches Tensid, wobei die Löslichkeit des nichtionischen Tensids in Wasser bei 20°C weniger als 0,2 Masse-% beträgt;

ein erstes wasserlösliches organisches Lösungsmittel, dessen Löslichkeitsparameter (SP) nicht weniger als 13 beträgt, wobei der Löslichkeitsparameter (SP) definiert ist als

$$SP = (\Sigma\Delta ei \,/\, \Sigma\Delta vi)^{1/2}$$

$\Delta ei$ = Verdampfungsenergie eines Atoms und einer Atomgruppe (cal/mol)

$\Delta vi$ = molares Volumen (cm3/mol);

ein zweites wasserlösliches organisches Lösungsmittel, dessen Löslichkeitsparameter kleiner als 12 ist; und Wasser,
wobei die Reinigungsflüssigkeit die folgenden Bedingungen (1) bis (4) erfüllt:

$$\text{Bedingung (1): } X \geq 0.1$$

$$\text{Bedingung (2): } A - B \geq 0$$

$$\text{Bedingung (3): } B \,/\, X \geq 15$$

$$\text{Bedingung (4): } 10 \leq A + B \leq 60$$

in den Bedingungen (1) bis (4),

X: eine Gehaltsmenge (Masse-%) des nichtionischen Tensids in einer Gesamtmenge der Reinigungsflüssigkeit,

A: eine Gehaltsmenge (Masse-%) des ersten wasserlöslichen organischen Lösungsmittels in der Gesamtmenge der Reinigungsflüssigkeit, und

B: eine Gehaltsmenge (Masse-%) des zweiten wasserlöslichen organischen Lösungsmittels in der Gesamtmenge der Reinigungsflüssigkeit, wobei das erste wasserlösliche organische Lösungsmittel mindestens eines enthält, ausgewählt von der Gruppe bestehend aus: Glycerin, Diethylenglykol und Propylenglykol, und

wobei das zweite wasserlösliche organische Lösungsmittel mindestens eines enthält, das ausgewählt ist von der Gruppe bestehend aus: Tripropylenglykol, 1,2-Hexandiol, Triethylenglykol-n-Butylether und Tripropylenglykol-n-Butylether.

7. Tintenstrahlaufzeichnungsgerät gemäß Anspruch 6, das ferner einen Wischer aufweist, der so konfiguriert ist, dass er in Kontakt mit einer Düsenformungsoberfläche des Tintenstrahlkopfes kommt und die Tinte von der Düsenformungsoberfläche abwischt,
wobei der Mechanismus zum Zuführen von Reinigungsflüssigkeit so konfiguriert ist, dass er dem Wischer die Reinigungsflüssigkeit zuführt.

8. Tintenstrahlaufzeichnungsgerät gemäß Anspruch 6 oder 7 weist ferner einen Trocknungsmechanismus auf, der zum Trocknen eines mit der Tinte aufgezeichneten Aufzeichnungsteils konfiguriert ist.

9. Verfahren zum Reinigen eines Tintenstrahlaufzeichnungsgeräts gemäß Anspruch 6,
wobei das Verfahren die Zufuhr der Reinigungsflüssigkeit zu dem Tintenstrahlkopf und dem Tintenkanal unter Verwendung des Mechanismus zur Zufuhr der Reinigungsflüssigkeit aufweist.

10. Verfahren gemäß Anspruch 9, wobei das Tintenstrahlaufzeichnungsgerät ferner einen Wischer enthält, der so konfiguriert ist, dass er mit einer Düsenbildungsoberfläche des Tintenstrahlkopfes in Kontakt kommt und eine Tinte von der Düsenbildungsoberfläche abwischt; und
das Reinigungsverfahren ferner das Zuführen der Reinigungsflüssigkeit zu dem Wischer unter Verwendung des Reinigungsflüssigkeits-Zuführmechanismus aufweist.

**Revendications**

1. Liquide de nettoyage qui peut être utilisé pour le nettoyage d'un appareil d'enregistrement à jet d'encre, le liquide de nettoyage comprenant:

un tensioactif non ionique, la solubilité du tensioactif non ionique dans l'eau à 20°C étant inférieure à 0,2 % en masse;
un premier solvant organique soluble dans l'eau dont le paramètre de solubilité n'est pas inférieur à 13, le paramètre de solubilité (SP) étant défini comme

$$SP = (\Sigma\Delta ei \, / \, \Sigma\Delta vi)^{1/2}$$

$\Delta$ei = énergie d'évaporation d'um atome et d'um groupe d'atomes (cal/mol)

$$\Delta vi = \text{volume molaire (cm}^3\text{/mol)};$$

un deuxième solvant organique soluble dans l'eau dont le paramètre de solubilité est inférieur à 12; et de l'eau,

dans lequel le liquide de nettoyage répond aux conditions suivantes (1) à (4):

$$\text{condition (1): } X \geq 0.1$$

$$\text{condition (2): } A - B \geq 0$$

$$\text{condition (3): } B \, / \, X \geq 15$$

$$\text{condition (4): } 10 \leq A + B \leq 60$$

dans les conditions (1) à (4),

X: une teneur (% en masse) du tensioactif non ionique dans une quantité totale du liquide de nettoyage,

A: une teneur (% en masse) du premier solvant organique soluble dans l'eau dans la quantité totale du liquide de nettoyage, et

B: une teneur (% en masse) du deuxième solvant organique soluble dans l'eau dans la quantité totale de la quantité de liquide de nettoyage,

dans lequel le premier solvant organique soluble dans l'eau comprend au moins un solvant choisi dans le groupe constitué de: glycérol, diéthylène glycol et propylène glycol, et

dans lequel le deuxième solvant organique soluble dans l'eau comprend au moins un solvant choisi dans le groupe constitué de: tripropylène glycol, 1,2-hexanediol, triéthylène glycol-n-butyl éther et tripropylène glycol-n-butyl éther.

2. Liquide de nettoyage selon la revendication 1, pouvant être utilisé avec de l'encre à base d'eau pour l'enregistrement à jet d'encre, comprenant des particules insolubles dans l'eau et de l'eau.

3. Liquide de nettoyage selon l'une quelconque des revendications 1 à 2, pouvant être utilisé pour nettoyer au moins un élément choisi dans le groupe constitué de: une tête à jet d'encre, un canal d'encre et un dispositif d'essuyage configuré pour entrer en contact avec une surface de formation de buse de la tête à jet d'encre et pour essuyer de l'encre de la surface de formation de buse, dans l'appareil d'enregistrement à jet d'encre.

4. Ensemble comprenant:

le liquide de nettoyage tel que défini dans l'une des revendications 1 à 3; et

de l'encre à base d'eau pour l'enregistrement à jet d'encre comprenant des particules insolubles dans l'eau et de l'eau.

5. Ensemble selon la revendication 4, dans lequel les particules insolubles dans l'eau sont des particules de pigment et/ou des particules de résine.

6. Appareil d'enregistrement à jet d'encre comprenant:

une partie de stockage d'encre configurée pour stocker de l'encre;

une tête à jet d'encre configurée pour décharger l'encre stockée dans la partie de stockage d'encre;

un canal d'encre situé entre la partie de stockage d'encre et la tête à jet d'encre;

une partie de stockage de liquide de nettoyage dans laquelle est stocké un liquide de nettoyage; et

un mécanisme d'alimentation en liquide de nettoyage configuré pour alimenter la tête à jet d'encre et le canal d'encre en liquide de nettoyage,

dans lequel le liquide de nettoyage comprend:

un tensioactif non ionique, la solubilité du tensioactif non ionique dans l'eau à 20°C étant inférieure à 0,2 % en masse;

un premier solvant organique soluble dans l'eau dont le paramètre de solubilité n'est pas inférieur à 13, le paramètre de solubilité (SP) étant défini comme

$$SP = (\Sigma\Delta ei \, / \, \Sigma\Delta vi)^{1/2}$$

$\Delta ei$ = énergie d'évaporation d'um atome et d'um groupe d'atomes (cal/mol)

$$\Delta vi = \text{volume molaire (cm}^3/\text{mol)};$$

un deuxième solvant organique soluble dans l'eau dont le paramètre de solubilité est inférieur à 12; et

de l'eau, et

dans lequel le liquide de nettoyage répond aux conditions suivantes (1) à (4):

$$\text{condition (1): } X \geq 0.1$$

$$\text{condition (2): } A - B \geq 0$$

$$\text{condition (3): } B \, / \, X \geq 15$$

$$\text{condition (4): } 10 \leq A + B \leq 60$$

dans les conditions (1) à (4),

X: une teneur (% en masse) du tensioactif non ionique dans une quantité totale du liquide de nettoyage,

A: une teneur (% en masse) du premier solvant organique soluble dans l'eau dans la quantité totale du liquide de nettoyage, et

B: une teneur (% en masse) du deuxième solvant organique soluble dans l'eau dans la quantité totale de la quantité de liquide de nettoyage,

dans lequel le premier solvant organique soluble dans l'eau comprend au moins un solvant choisi dans le groupe constitué de: glycérol, diéthylène glycol et propylène glycol, et

dans lequel le deuxième solvant organique soluble dans l'eau comprend au moins un solvant choisi dans le groupe constitué de: tripropylène glycol, 1,2-hexanediol, triéthylène glycol-n-butyl éther et tripropylène glycol-n-butyl éther.

7. Appareil d'enregistrement à jet d'encre selon la revendication 6, comprenant en outre un dispositif d'essuyage configuré pour entrer en contact avec une surface de formation de buse de la tête à jet d'encre et pour essuyer l'encre de la surface de formation de buse,

dans lequel le mécanisme d'alimentation en liquide de nettoyage est configuré pour alimenter le dispositif d'essuyage en liquide de nettoyage.

8. Appareil d'enregistrement à jet d'encre selon la revendication 6 ou 7, comprenant en outre un mécanisme de séchage configuré pour sécher une partie d'enregistrement enregistrée avec l'encre.

9. Procédé de nettoyage d'un appareil d'enregistrement à jet d'encre selon la revendication 6,
le procédé de nettoyage comprend l'alimentation de la tête à jet d'encre et du canal d'encre en liquide de nettoyage à l'aide du mécanisme d'alimentation en liquide de nettoyage.

10. Procédé de nettoyage selon la revendication 9, dans lequel l'appareil d'enregistrement à jet d'encre comprend en outre un dispositif d'essuyage configuré pour entrer en contact avec une surface de formation de buse de la tête à jet d'encre et pour essuyer l'encre de la surface de formation de buse; et
le procédé de nettoyage comprend en outre une alimentation du dispositif d'essuyage en liquide de nettoyage à l'aide du mécanisme d'alimentation en liquide de nettoyage.

[Fig. 1]

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018124124 A1
- US 20050018023 A1
- US 20170008312 A1
- WO 2018124120 A1
- JP SHO5871170 A
- JP SHO62169876 A
- JP SHO62169877 A
- JP HEI01148557 A
- JP HEI83498 A
- US 5609671 A
- JP 2000513396 W
- US 5837045 A
- JP 2008524400 W
- US 20060201380 A1
- JP 2009515007 W
- US 20070100023 A1
- US 20070100024 A1
- JP 2011515535 W
- US 20090229489 A1